(19) Europäisches Patentamt

European Patent Office

Office européen des brevets

(11) **EP 0 899 578 B1**

(12) **FASCICULE DE BREVET EUROPEEN**

(45) Date de publication et mention
de la délivrance du brevet:
**04.10.2001 Bulletin 2001/40**

(51) Int Cl.⁷: **G01S 5/12**, G01S 5/00

(21) Numéro de dépôt: **98402097.4**

(22) Date de dépôt: **24.08.1998**

(54) **Procédé de localisation d'un terminal fixe grâce à une constellation de satellites**

Verfahren zur Standortbestimmung eines festen Endgeräts mittels Satellitenkonstellation

Method of localising the position of a fixed terminal employing a constellation of satellites

(84) Etats contractants désignés:
**DE ES FI GB IT**

(30) Priorité: **25.08.1997 FR 9710602**

(43) Date de publication de la demande:
**03.03.1999 Bulletin 1999/09**

(73) Titulaire: **ALCATEL**
**75008 Paris (FR)**

(72) Inventeurs:
• **Durnez, François**
**75014 Paris (FR)**
• **Bousquet, Jacques**
**78290 Croissy Sur Seine (FR)**

(74) Mandataire: **Lamoureux, Bernard et al**
**COMPAGNIE FINANCIERE ALCATEL**
**Dépt. Propriété industrielle**
**30, avenue Kléber**
**75116 Paris (FR)**

(56) Documents cités:
**WO-A-92/21181          DE-B- 1 591 518**

**Description**

Le domaine de l'invention est celui des systèmes de télécommunications par satellites.

De façon classique, un système de télécommunications par satellites comprend notamment une constellation de satellites non géostationnaires (constituée par exemple de 64 satellites à orbite basse), une pluralité de stations de base (ou "Gateway Stations" en anglais), ainsi qu'une pluralité de terminaux fixes. Chaque station de base est associée à une cellule géographique distincte (ou "spot") et est reliée à un réseau terrestre de télécommunication. Chaque terminal communique, via les satellites, avec la station de base (et par conséquent avec le réseau terrestre de télécommunication) de la cellule dans laquelle il se trouve. Chaque satellite, lorsqu'il est actif vis-à-vis d'une station de base, reçoit de celle-ci des informations qu'il retransmet vers le ou les terminaux fixes présents dans sa zone de couverture. Inversement, chaque satellite, lorsqu'il est actif vis-à-vis d'une station de base, retransmet vers celle-ci les informations qu'il reçoit de chaque terminal fixe présent dans sa zone de couverture. On rappelle qu'un satellite ne peut être actif vis-à-vis d'une station de base que s'il se trouve en visibilité de celle-ci.

Plus précisément, l'invention concerne un procédé de localisation d'un terminal fixe d'un tel système de télécommunications par satellites.

Pour diverses raisons, il est en effet nécessaire de connaître la position de chaque terminal fixe du système. Par exemple, cela permet de synchroniser entre eux les terminaux fixes, de façon à éviter ou réduire le brouillage, lors de la réception par les satellites, entre signaux émis par différents terminaux fixes. Cela permet également de déterminer la zone tarifaire à laquelle appartient chaque terminal fixe.

On notera que le terminal considéré ici est fixe. Sa localisation est donc effectuée lors de son installation initiale, ou lors de chaque nouvelle installation si le terminal est déplacé (par exemple d'une maison à une autre).

Afin de localiser un terminal fixe, une première solution connue consiste à implémenter dans ce dernier un récepteur d'un des systèmes de localisation connus, tels que le système GPS (pour "Global Positioning System" en anglais) ou GLONASS (pour "Global Navigation Satellite System" en anglais).

Cette première solution connue présente l'inconvénient majeur d'être très coûteuse. En effet, un récepteur de type GPS ou GLONASS présente un coût trop élevé vis-à-vis du prix d'un terminal fixe "grand public". En outre, du fait que la localisation du terminal fixe n'est effectuée qu'à l'installation, l'ajout dans le terminal fixe d'un récepteur de localisation spécialisé représente un investissement excessif pour l'utilisation qui en est faite.

Une seconde solution connue consiste à mettre en oeuvre, à l'aide de l'infrastructure existante (c'est-à-dire notamment avec le terminal fixe que l'on cherche à localiser et certains satellites de la constellation), une technique de localisation connue, de type AOA (pour "Angle Of Arrival" en anglais) ou TDOA (pour "Time Difference Of Arrivai" en anglais).

Avec la technique AOA, la position du terminal est déterminée en combinant des angles d'arrivée de signaux provenant de différents satellites. Avec la technique TDOA, la position du terminal est déterminée en combinant des différences de temps d'arrivée de signaux provenant de différents satellites.

Contrairement à la première solution connue discutée ci-dessus, cette seconde solution connue ne nécessite aucun récepteur de localisation spécialisé (de type GPS ou GLONASS).

Néanmoins, quelle que soit la technique de localisation utilisée (AOA ou TDOA), cette seconde solution connue est difficile à mettre en oeuvre. En effet, la technique AOA nécessite une référence des antennes précise en azimuth et en élévation, tandis que la technique TDOA nécessite des émetteurs satellites synchrones. Ces différentes conditions sont difficiles, voire impossible, à respecter sans que cela entraîne une forte augmentation du coût du système. Or, à nouveau, il convient de noter que, du fait qu'elle n'est effectuée qu'à l'installation, la localisation du terminal fixe ne doit pas représenter un investissement excessif.

L'invention a notamment pour objectif de pallier ces différents inconvénients de l'état de la technique.

Plus précisément, l'un des objectifs de la présente invention est de fournir un procédé de localisation d'un terminal fixe d'un système de télécommunications par satellites, ce procédé étant simple à mettre en oeuvre et peu coûteux.

L'invention a également pour objectif de fournir un tel procédé ne nécessitant pas l'implémentation dans le terminal fixe d'un récepteur de localisation spécialisé (de type GPS ou GLONASS).

Un autre objectif de l'invention est de fournir un tel procédé utilisant l'infrastructure existante du système sans imposer de conditions draconiennes au terminal fixe (pas de référence en azimuth précise) ni aux satellites (ces derniers n'ont pas à être synchrones).

Ces différents objectifs, ainsi que d'autres qui apparaîtront par la suite, sont atteints selon l'invention à l'aide d'un procédé d'amélioration de la précision de localisation d'un terminal fixe d'un système de télécommunications par satellites du type comprenant une constellation de satellites, une pluralité de stations de base, chacune associée à une cellule géographique distincte et reliée à un réseau terrestre de télécommunication, et une pluralité de terminaux fixes,

un ou plusieurs satellite(s) étant dit(s) actif(s) vis-à-vis d'une station de base donnée lorsqu'il(s) se trouve(nt) en visibilité de celle-ci, chaque satellite actif qui reçoit des informations de la station de base vis-à-vis de laquelle il est actif les retransmettant vers le ou les terminaux fixes présents dans sa zone de couverture, chaque satellite actif qui reçoit des informations d'un terminal fixe présent dans sa zone de couverture les retransmettant vers la station de base vis-à-vis de laquelle il est actif,

Le procédé comportant une première phase de localisation dite grossière apte à fournir une surface de présence dans laquelle la position estimée grosière du terminal se trouve, caracterisé en ce qu'il comprend une seconde phase de localisation dite "moyenne", comprenant elle-même les étapes suivantes :

-i- à un premier instant t1', ledit terminal reçoit d'un premier satellite actif de premières informations relatives d'une part à l'instant t1 de retransmission desdites premières informations par ledit premier satellite actif et d'autre part à la position p1 dudit premier satellite actif audit instant t1 ;

-ii- à un second instant t2', égal à ou proche dudit premier instant t1', ledit terminal reçoit d'un second satellite actif de secondes informations relatives d'une part à l'instant t2 de retransmission desdites secondes informations par ledit second satellite actif et d'autre part à la position p2 dudit second satellite actif audit instant t2 ;

-iii- ledit terminal calcule un premier hyperboloïde $H_{1,2}$ sur lequel se trouve ledit terminal et tel que : $H_{1,2} : d2 - d1 = (t2' - t2).c - (t1' - t1).c$, où :

- d1 est la distance entre le terminal et ladite position p1 du premier satellite actif à l'instant t1,
- d2 est la distance entre le terminal et ladite position p2 du second satellite actif à l'instant t2,
- t1 et t2 sont lesdits premier et second instants de retransmission par lesdits premier et second satellites respectivement,
- t1' et t2' sont lesdits premier et second instants de réception par le terminal,
- c est la vitesse de la lumière ;

-iv- ledit terminal réitère les étapes -i- à -iii- au moins deux fois, de façon à calculer au moins des second et troisième hyperboloïdes sur lesquels se trouve ledit terminal ;

-v- ledit terminal détermine une position estimée "moyenne", en calculant l'intersection desdits remier et au moins second et troisième hyperboloïdes et en tenant compte de la position estimée "grossière" dudit terminal.

Le procédé de localisation selon la présente invention comprend donc une phase de localisation "moyenne", par exemple à ± 300 m. Le principe général de cette phase de localisation "moyenne" consiste, pour le terminal, à calculer l'intersection d'au moins trois hyperboloïdes sur lesquels il se trouve, en supposant déjà connue une estimation de sa position "grossière" (par exemple à± 100 km).

Il est clair que l'incertitude avec laquelle cette intersection est déterminée est d'autant plus faible que le nombre d'hyperboloïdes pris en compte est grand (on prend par exemple jusqu'à cent hyperboloïdes).

Il est important de noter que le procédé de l'invention se distingue clairement de la technique TDOA classique puisque, dans le cas de l'invention, le terminal calcule chaque hyperboloïde grâce à des informations reçues de deux satellites non obligatoirement synchrones. On rappelle en effet que les instants t1 et t2 de retransmission par les premier et second satellites respectivement ne sont pas nécessairement égaux.

Cette caractéristique distinctive peut également être exprimée par le fait que chaque hyperboloïde de l'invention ne correspond pas à une image réelle du système puisqu'il n'est pas calculé en fonction de la position, à un instant unique donné, des premier et second satellites. En fait, chaque hyperboloïde de l'invention correspond à une image fictive du système, tenant compte d'une part de la position p1, à un premier instant donné t1, du premier satellite et d'autre part de la position p2, à un second instant donné t2, du second satellite.

La seule condition imposée par l'invention est que les instants t1' et t2' de réception par le terminal soient égaux ou proches l'un de l'autre (par exemple décalés de quelques millisecondes), de façon que l'estimation de (t2' - t1') soit correcte malgré que l'horloge du terminal n'est pas très précise comparée à celle de chacun des satellites.

Avantageusement, dans ladite étape -iv-, chaque nouvelle itération des étapes -i- à -iii- est effectuée avec un couple de satellites appartenant au groupe comprenant :

- un couple de deux satellites distincts desdits premier et second satellites ;
- un couple de deux satellites dont l'un est un desdits premier et second satellites et l'autre est distinct desdits premier et second satellites.

En d'autres termes, le nombre de satellites nécessaires diffère selon le nombre de satellites que le terminal est capable d'écouter simultanément. Par exemple, si le terminal est capable d'écouter simultanément trois satellites, il peut recevoir, à des instants t1', t2' et t3' proches ou égaux, des informations provenant de ces trois satellites, et calculer les trois hyperboloïdes suivants : $H_{1,2}$, $H_{1,3}$ et $H_{2,3}$, où l'hyperboloïde $H_{i,j}$ est calculé grâce aux ième et jème satellites. En revanche, si le terminal n'est capable d'écouter simultanément que deux satellites, alors le calcul des trois hyperboloïdes suivants : $H_{1,2}$, $H_{3,4}$ et $H_{5,6}$, requiert six satellites distincts.

De façon avantageuse, ladite phase de localisation "moyenne" comprend en outre l'étape suivante : -vi- en utilisant la position estimée "moyenne" précédente à la place de ladite position estimée "grossière", ledit terminal réitère au moins une fois les étapes -i- à -v-, de façon à obtenir une nouvelle position estimée "moyenne".

Ainsi, on améliore encore l'estimation de la localisation "moyenne".

Avantageusement, la station de base, vis-à-vis de laquelle lesdits premier et second satellites sont actifs, émet lesdites premières et secondes informations avec une précompensation temporelle telle qu'après retransmission par lesdits premier et second satellites, lesdites premières et secondes informations sont reçues sensiblement simultanément par ladite station de base.

Préférentiellement, le couple desdits premier et second satellites actifs appartient au groupe comprenant :

- les couples dont les deux satellites sont simultanément actifs à un instant quelconque ;
- les couples dont les deux satellites, dits satellites sortant et entrant respectivement, sont simultanément actifs uniquement lors d'un saut inter-satellites (ou "hand-off" en anglais) du type permettant à une station de base de remplacer ledit satellite actif sortant, qui cesse d'être en visibilité, par ledit satellite actif entrant, qui arrive en visibilité.

On notera qu'à partir d'environ 90% des points de la surface terrestre, il est possible de voir à tout moment au moins deux satellites actifs. En effet, environ 90% des cellules géographiques (ou "spots") sont couverts par au moins deux satellites en même temps. Par conséquent, dans 90% des cas, il est aisé de trouver deux satellites simultanément actifs à un instant quelconque.

Pour les 10% restants des points de la surface terrestre, du fait que l'on suppose connue une position estimée "grossière", le terminal peut approximativement pointer (mais de façon suffisante) sur n'importe quel satellite rentrant dans le spot En suivant ce satellite, le terminal est tenu au courant de tout saut inter-satellite. Ainsi, pendant le saut inter-satellite, qui dure généralement quelques secondes, le terminal dispose de deux satellites (l'un entrant et l'autre sortant) actifs simultanément.

De façon avantageuse, chaque terminal comprend des moyens de réception simultanée d'informations émises par au moins deux satellites distincts.

Avantageusement, lesdits moyens de réception simultanée d'informations émises par au moins deux satellites distincts comprennent au moins deux antennes directives pointées chacune sur un satellite distinct.

Dans un mode de réalisation préférentiel de l'invention, ladite phase de localisation "grossière" comprend les étapes suivantes :

-a- ledit terminal recherche et acquiert un satellite, pour une élévation $\alpha$ prédéterminée, en faisant varier son azimuth $\theta$ ;

-b- ledit terminal reçoit dudit satellite acquis une information relative à la position dudit satellite acquis ;

-c- ledit terminal calcule, à partir de ladite information relative à la position du satellite acquis, une surface isoélévation, projetée sur un modèle de terre prédéterminé et sur laquelle se trouve ledit terminal ;

-d- ledit terminal réitère les étapes -a- à -c- au moins deux fois, de façon à calculer au moins deux autres surfaces isoélévation sur lesquelles se trouve ledit terminal ;

-e- ledit terminal détermine une position estimée "grossière", en calculant l'intersection desdites au moins trois surfaces isoélévation.

Le procédé de localisation selon la présente invention comprend donc également une phase de localisation "grossière", par exemple à $\pm$ 100 km. Le principe général de cette phase de localisation "grossière" consiste, pour le terminal, à calculer l'intersection d'au moins trois surfaces isoélévation sur lesquelles il se trouve.

Il est à noter que l'étape -b- suppose que l'éphéméride de chacun des satellites de la constellation est connue du système. Par ailleurs, l'étape -c- suppose que le terminal connaît l'angle d'élévation $\alpha$ de son antenne par rapport au sol. Cela peut être envisagé en posant le terminal à l'horizontal.

Avantageusement, sur lesdits au moins trois satellites, acquis lors des itérations successives des étapes -a- à -c-, au moins un possède un azimuth $\theta$, vus par ledit terminal, distant d'au moins 10° des azimuth des deux autres satellites.

De cette façon, on réduit la surface d'intersection des surfaces isoélévation.

De façon avantageuse, lors de ladite étape -a-, lesdites deux antennes directives tournent à une même élévation, chacune couvrant environ 180° autour de l'angle d'azimuth $\theta$.

De cette façon, chaque antenne couvre, de façon complémentaire avec l'autre antenne, un demi-tour, et on minimise donc le temps nécessaire pour scruter sur un tour complet (c'est-à-dire pour l'azimuth $\theta$ variant de 0 à $2\pi$).

Dans un mode de réalisation avantageux de l'invention, ladite phase de localisation "moyenne" est suivie d'une phase de localisation "fine" comprenant les étapes suivantes :

-1- la station de base associée à la cellule dans laquelle se trouve ledit terminal émet vers ledit terminal, via un satellite actif vis-à-vis de ladite station de base, un message prédéterminé ;

-2- ledit terminal reçoit ledit message prédéterminé et, connaissant d'une part sa position estimée "moyenne" et d'autre part la position temps réel des satellites de ladite constellation, génère puis émet vers ladite station de base, via ledit satellite actif, un message de réponse indiquant notamment l'intervalle de temps entre la réception dudit message prédéterminé et l'émission dudit message de réponse ;

-3- à partir dudit message de réponse, ladite station de base calcule une information relative à l'avance temporelle que présente ledit terminal ;

-4- ladite station de base émet vers ledit terminal, via ledit satellite actif, ladite information relative à l'avance temporelle

-5- à partir de ladite information relative à l'avance temporelle et de ladite position estimée "moyenne", ledit terminal calcule sa position estimée "fine".

Le procédé de localisation selon la présente invention comprend donc une phase de localisation "fine", par exemple à ± 60 m. Le principe général de cette phase de localisation "fine" consiste à calculer l'avance temporelle (ou "Timing Advance" en anglais) que présente le terminal vis-à-vis de la station temporelle, ou plus précisément l'avance temporelle que présentent les signaux provenant du terminal (via le satellite actif) lorsqu'ils sont reçus par la station de base.

Ainsi, contrairement aux phases de localisation "grossière" et "moyenne", cette phase de localisation "fine" est active et non passive. En d'autres termes, le terminal rentre ici en communication, via un satellite actif, avec la station de base de la cellule où il se trouve. Cette entrée en communication se fait par exemple à des instants particuliers, réservés lors de faibles trafics et permettant de recevoir des signaux décalés.

Selon une variante avantageuse, ladite phase de localisation "fine" comprend en outre les étapes préalable et finale suivantes :

-0- ledit terminal émet vers ladite station de base, via ledit satellite actif, une information relative à sa position estimée "moyenne" ;

-6- ladite station de base émet vers ledit terminal, via ledit satellite actif, ladite position estimée "fine" du terminal ;

et ladite étape -5- est remplacée par l'étape suivante :

-5'- à partir de ladite information relative à l'avance temporelle et de ladite position estimée "moyenne", ladite station de base calcule la position estimée "fine" du terminal.

Dans cette variante, c'est la station de base (et non pas le terminal) qui effectue le calcul de la position estimée "fine".

Préférentiellement, ladite phase de localisation "fine" comprend en outre l'étape suivante :

-7- en utilisant la position estimée "fine" précédente à la place de ladite position estimée "moyenne", ledit terminal réitère au moins une fois les étapes -1- à -5- ou -0- à -6-, de façon à obtenir une nouvelle position estimée "fine".

Il est à noter que si les étapes -1- à -5- (ou -0- à -6-) sont réitérées plusieurs fois en utilisant une même position estimée "fine" précédente, il convient de prévoir une étape supplémentaire de détermination de la nouvelle position estimée "fine" optimale parmi un ensemble prédéterminé de positions possibles. Cet ensemble prédéterminé inclut par exemple tous les points compris dans un disque centré sur la position estimée "fine" précédente et de rayon égal à l'incertitude sur l'estimation de cette position estimée "fine" précédente.

Avantageusement, dans l'étape -7-, chaque nouvelle itération des étapes -1- à -5-ou -0- à -6- est effectuée avec un même satellite, mais à des azimuths $\theta$ et/ou des élévations $\alpha$, vus par ledit terminal, distants d'au moins 10°.

Ainsi, on cherche à éliminer les biais en localisation satellite. Par exemple, pour des satellites à orbite basse (ou LEO, pour "Low Earth Orbit" en anglais), le respect des conditions précitées conduit à attendre cinq minutes entre chaque mesure avec le même satellite.

Selon une variante avantageuse, dans l'étape -7-, chaque nouvelle itération des étapes -1- à -5- ou -0- à -6- est effectuée avec un satellite distinct.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un organigramme simplifié d'un mode de réalisation particulier du procédé de localisation selon l'invention ;
- la figure 2 présente un organigramme simplifié d'un mode de réalisation particulier de la phase de localisation "grossière" apparaissant sur l'organigramme de la figure 1 ;
- les figures 3 et 4 présentent chacune une vue, en perspective et de dessus respectivement, d'un anneau de recherche d'un satellite à une élévation donnée, permettant d'expliciter l'une des étapes de l'organigramme de la figure 2 ;
- les figures 5 et 6 présentent chacune une vue, de côté et du satellite respectivement, d'une surface isoélévation, permettant d'expliciter l'une des étapes de l'organigramme de la figure 2 ;
- la figure 7 présente un organigramme simplifié d'un mode de réalisation particulier de la phase de localisation "moyenne" apparaissant sur l'organigramme de la figure 1;
- la figure 8 présente un schéma illustrant de façon temporelle certaines étapes de l'organigramme de la figure 7 ;
- la figure 9 présente un organigramme simplifié d'un premier mode de réalisation particulier de la phase de localisation "fine" apparaissant sur l'organigramme de la figure 1 ;

- la figure 10 présente un schéma illustrant de façon temporelle certaines étapes de l'organigramme de la figure 9 ; et
- la figure 11 présente un organigramme simplifié d'un second mode de réalisation particulier de la phase de localisation "fine" apparaissant sur l'organigramme de la figure 1.

L'invention concerne donc un procédé de localisation d'un terminal fixe d'un système de télécommunications par satellites.

De façon classique, et comme déjà expliqué plus en détail ci-dessus, un tel système de télécommunications par satellites comprend une constellation de satellites, une pluralité de stations de base et une pluralité de terminaux fixe.

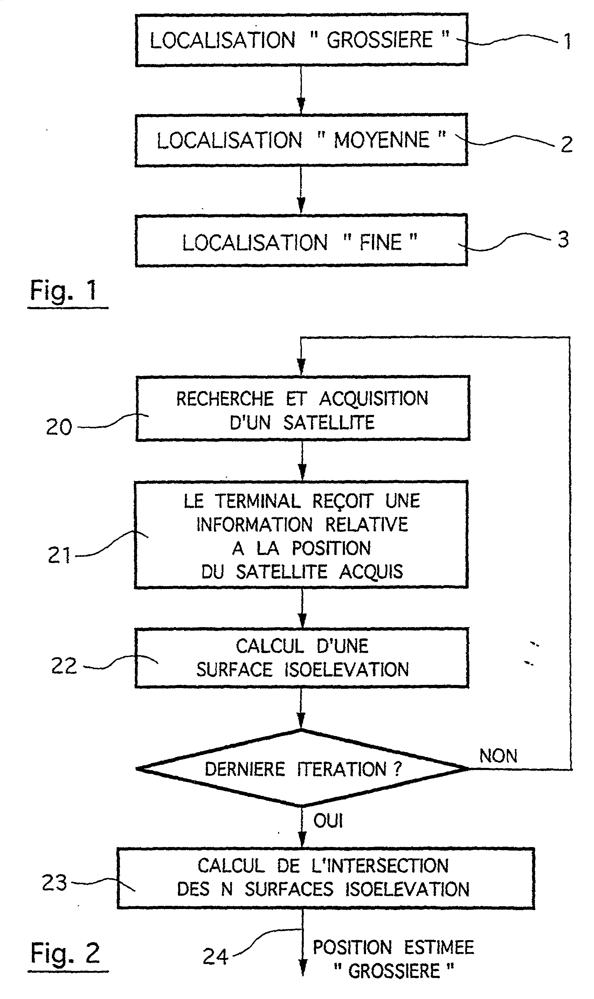

Dans le mode de réalisation particulier de la figure 1, le procédé de localisation selon l'invention comprend :

- une phase de localisation "grossière" 1, par exemple à ± 100 km ;
- une phase de localisation "moyenne" 2, par exemple à ± 350 m ; et
- une phase de localisation "fine" 3, par exemple à ± 60 m.

A titre d'exemple, on suppose que chaque terminal comprend deux antennes directives permettant la réception simultanée d'informations émises par deux satellites distincts. Il est clair cependant que chaque terminal peut comprendre des moyens d'écoute simultanée de plus de deux satellites.

On présente maintenant, en relation avec les figures 2 à 6, un mode de réalisation particulier de la phase de localisation "grossière" 1.

Comme présenté sur l'organigramme simplifié de la figure 2, dans ce mode de réalisation particulier, la phase de localisation "grossière" 1 comprend les étapes suivantes:

- le terminal recherche et acquiert (20) un satellite, pour une élévation α prédéterminée, en faisant varier son azimuth θ ;
- le terminal reçoit (21) du satellite acquis une information relative à la position de ce satellite acquis ;
- le terminal calcule (22), à partir de l'information relative à la position du satellite acquis, une surface isoélévation, projetée sur un modèle de terre prédéterminé et sur laquelle se trouve le terminal;
- le terminal réitère les étapes précitées 20 à 22, de façon à effectuer N itérations au total, avec N ≥ 3. Le terminal calcule donc N surfaces isoélévation sur lesquelles il se trouve. Les N satellites, acquis lors des N itérations des étapes précitées 20 à 22, possèdent des azimuths θ, vus par le terminal, distants par exemple d'au moins 30°. D'une façon générale, sur les N satellites, acquis lors des itérations successives, au moins un possède un azimuth θ, vus par le terminal, distant d'au moins 10° des azimuth des deux autres satellites ;

- le terminal détermine (23) une position estimée "grossière", en calculant l'intersection des N surfaces isoélévation.

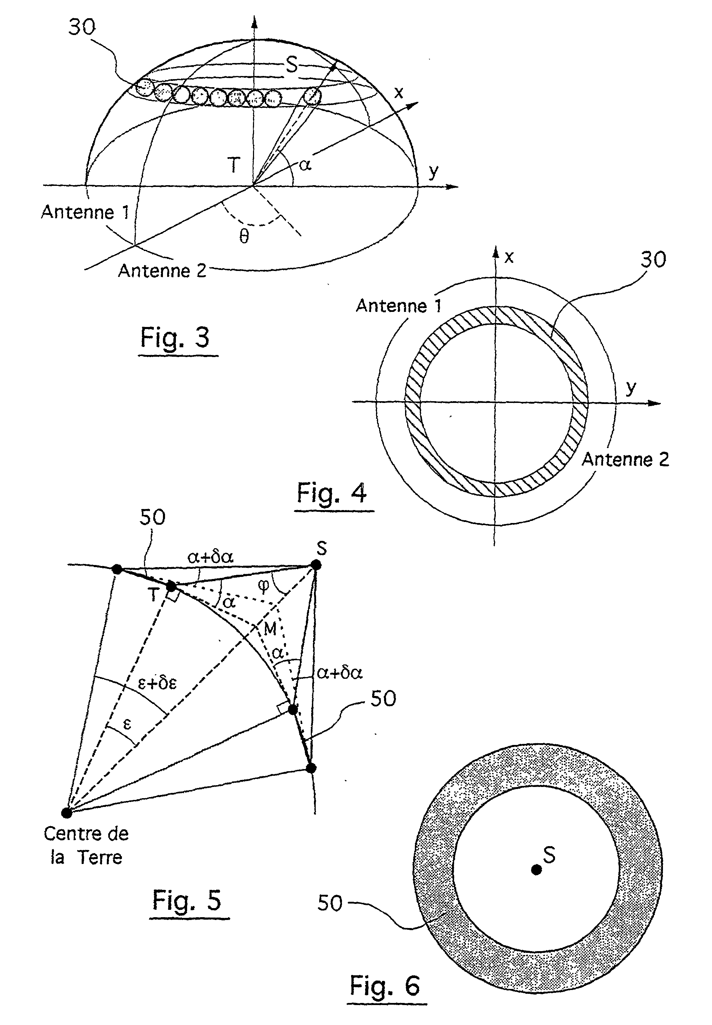

Au cours de l'étape référencée 20, le terminal recherche un satellite dans un anneau où le satellite peut potentiellement se trouver, sachant que le satellite se trouve à une distance prédéterminée de la terre (par exemple 1500 km). Les figures 3 et 4 présentent chacune une vue, en perspective et de dessus respectivement, d'un tel anneau 30 de recherche par le terminal T d'un satellite S à une élévation a donnée. Au cours de cette étape 20 de recherche et d'acquisition, les deux antennes directives du terminal tournent à une même élévation, chacune couvrant environ 180° autour de l'angle d'azimuth θ.

Les figures 5 et 6 présentent chacune une vue, de côté et de dessus (du satellite S) respectivement, d'une surface isoélévation calculée par le terminal T lors de l'étape référencée 22. En considérant une projection sur un modèle de terre sphérique parfait, et du fait de l'incertitude δα sur l'élévation α, la surface isoélévation est une couronne 50. Il est clair que d'autres modèles de terre, plus complexes, peuvent également être envisagés sans sortir du cadre de la présente invention.

A l'issue de cette phase de localisation "grossière" 1, le terminal dispose d'une position estimée "grossière" 24, par exemple à 200 km (c'est-à-dire à ± 100 km). En outre, le terminal peut effectuer une correction du biais en azimuth, par exemple à environ ± 2°, grâce à la localisation "grossière" du terminal et des N satellites acquis successivement, ainsi qu'une correction du temps à quelques millisecondes, ce qui permet de garder une référence temporelle inférieure à 1 seconde pendant toute les phases suivantes de localisation "moyenne" et "fine".

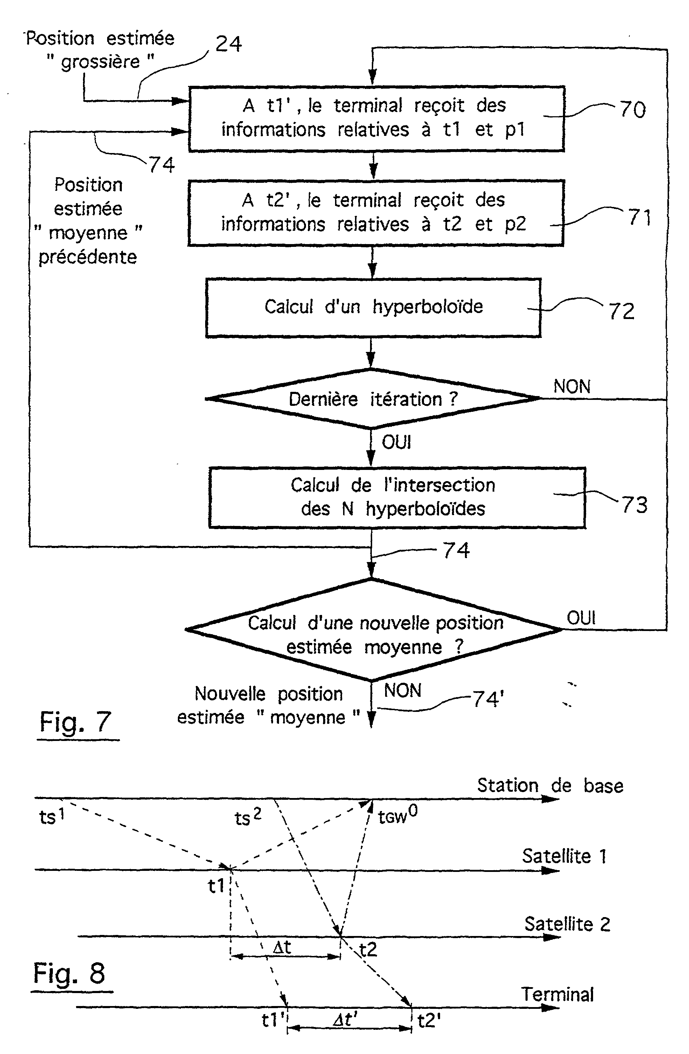

On présente maintenant, en relation avec les figures 7 et 8, un mode de réalisation particulier de la phase de localisation "moyenne" 2.

Comme présenté sur l'organigramme simplifié de la figure 7, dans ce mode de réalisation particulier, la phase de localisation "moyenne" 1 comprend les étapes suivantes:

- à un premier instant t1', le terminal reçoit (70) d'un premier satellite actif ("satellite 1") de premières informations relatives d'une part à l'instant t1 de retransmission des premières informations par le premier satellite actif et d'autre part à la position pi du premier satellite actif à l'instant t1 ;
- à un second instant t2', égal à ou proche du premier instant t1', le terminal reçoit (71) d'un second satellite actif ("satellite 2") de secondes informations relatives d'une part à l'instant t2 de retransmission des secondes informations par le second satellite actif et d'autre part à la position p2 du second satellite actif à l'instant t2 ;

- le terminal calcule (72) un premier hyperboloïde $H_{1,2}$ sur lequel se trouve le terminal (cf explication détaillée ci-dessous) ;

- le terminal réitère les étapes précitées 70 à 72, de façon à effectuer N itérations au total, avec $N \geq 3$. Le terminal calcule donc N hyperboloïdes sur lesquels il se trouve ;

- connaissant la position estimée "grossière" 24, le terminal détermine (73) une position estimée "moyenne" 74, en calculant l'intersection des N hyperboloïdes.

Eventuellement, en utilisant la position estimée "moyenne" (précédente) 74 à la place de la position estimée "grossière" 24, le terminal peut réitérer M fois les N itérations des étapes précitées 70 à 72 ainsi que l'étape précitée 73, de façon à obtenir M fois une nouvelle position estimée "moyenne" 74'.

Ces M nouvelles positions estimées "moyennes" peuvent être calculées successivement, soit chacune à partir de la position estimée "moyenne" de l'itération qui précède, soit toutes à partir d'une même position estimée ("grossière" ou "moyenne" précédente).

Dans le second cas, on peut alors prévoir d'optimiser l'étape 73 de détermination de la position estimée "moyenne" 74. Pour cela, on recherche le point P, parmi un ensemble prédéterminé de points, qui minimise l'erreur que présente la position estimée "moyenne" du terminal, lorsque cette erreur est cumulée sur les M positions estimées "moyennes" toutes calculées à partir d'une même position estimée "grossière" ou "moyenne" précédente. L'ensemble prédéterminé de points est par exemple un disque dont le centre est la position estimée "grossière" (pour le premier calcul d'une position estimée "moyenne") ou la position estimée "moyenne" précédente (pour chaque calcul d'une nouvelle position estimée "moyenne"), et le rayon est l'incertitude présentée par la position estimée ("grossière" ou "moyenne" précédente) à laquelle est égal le centre du disque.

Chaque hyperboloïde $H_{i,j}$ calculé par le terminal lors de l'étape référencée 72 est tel que : $H_{i,j} = dj - di = (tj' - tj).c - (ti' - ti).c$, où :

- di est la distance entre le terminal et la position pi du ième satellite actif à l'instant ti,

- dj est la distance entre le terminal et la position pj du jème satellite actif à l'instant tj,

- ti et tj sont les ième et jème instants de retransmission par les ième et jème satellites respectivement,

- ti' et tj' sont les ième et jème instants de réception par le terminal,

- c est la vitesse de la lumière.

La relation définissant chaque hyperboloïde $H_{i,j}$ peut également écrire :

$$H_{i,j} = dj - di = (tj' - ti').c - (tj - ti).c = \Delta t'.c - \Delta t.c$$

Le terminal peut calculer $\Delta t'$ et $\Delta t$ puisqu'il reçoit ti et tj. Par ailleurs, il mesure lui-même ti' et tj'. Par conséquent, connaissant les positions pi et pj des ième et jème satellites aux instants ti et tj respectivement, le terminal peut calculer l'hyperboloïde $H_{i,j}$.

Pour le calcul d'un hyperboloïde $H_{i,j}$, on utilise soit deux satellites actifs simultanément actifs à un instant quelconque, soit deux satellites actifs (sortant et entrant respectivement) simultanément actifs uniquement lors d'un saut inter-satellites ("hand-off").

Chacune des deux antennes directives du terminal est pointée sur un satellite distinct. Comme déjà précisé ci-dessus, il est clair que si le terminal peut écouter simultanément plus de deux satellites actifs, alors plusieurs hyperboloïdes peuvent être calculés à partir des différentes informations reçues. Chaque couple de satellites permet de calculer un hyperboloïde.

La figure 8 permet de visualiser les instants t1, t2, t1' et t2', avec les éléments respectifs concernés (à savoir le premier satellite pour t1, le second satellite pour t2, et le terminal pour t1' et t2'), ainsi que les intervalles de temps $\Delta t$ et $\Delta t'$. Cette figure 8 illustre également le fait que la station de base émet, à des instants $t_s^1$ et $t_s^2$, les premières et secondes informations que les premier et second satellites retransmettent aux instants t1 et t2. On notera que, dans l'exemple présenté, la station de base émet (aux instants $t_s^1$ et $t_s^2$) avec une précompensation temporelle, afin que les premières et secondes informations retransmises (aux instants $t_s^1$ et $t_s^2$) par les premier et second satellites sont reçues sensiblement simultanément (à l'instant $t_{GW}^0$) par la station de base.

A l'issue de cette phase de localisation "moyenne" 1, le terminal dispose d'une position estimée "moyenne" 74 ou 74', par exemple à $\pm$ 350 m).

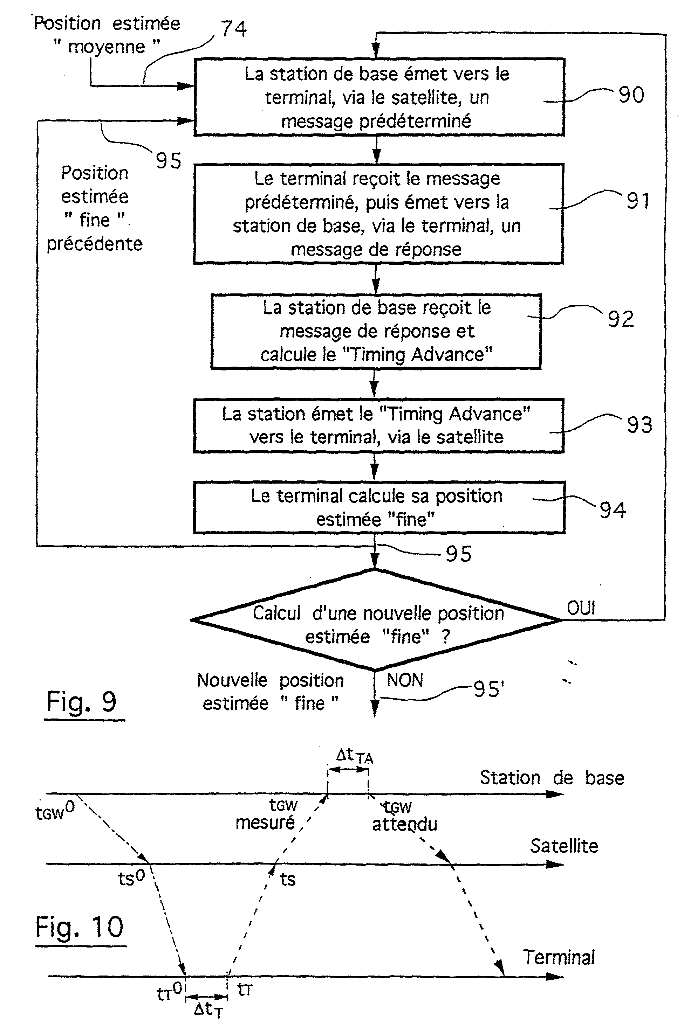

On présente maintenant, en relation avec les figures 9-10 et 11 respectivement, un premier et un second modes de réalisation particuliers de la phase de localisation "fine" 3.

Dans le premier mode de réalisation particulier, la phase de localisation "fine" 3 comprend les étapes suivantes :

- la station de base (associée à la cellule dans laquelle se trouve le terminal) émet (90) vers le terminal, via un satellite actif, un message prédéterminé. Comme présenté sur la figure 10, la station de base émet à l'instant $t_{GW}0$ et le satellite retransmet à l'instant $t_s^0$ ;

- le terminal reçoit, à l'instant $t_T^0$, le message prédéterminé et, connaissant d'une part sa position estimée "moyenne" et d'autre part la position temps réel du satellite actif, génère puis émet (91) vers la station de base, via le satellite actif, un message de réponse indiquant notamment l'intervalle de temps $\Delta t_T$ entre l'instant $t_T^0$ de réception du message prédéterminé et l'instant d'émission $t_T$ du message de réponse. Comme présenté sur la figure 10, le satellite retransmet à l'instant $t_s$ le message de réponse émis par le terminal à l'instant $t_T$ ;

- la station de base reçoit, à l'instant "$t_{Gw}$ mesuré", le message de réponse et, à partir de ce dernier, calcule (92) une information relative à l'avance temporelle $\Delta t_{TA}$ que présente le message de réponse provenant du terminal. En fait, la station de base calcule la différence $\Delta t_{TA}$ entre l'instant de réception "$t_{GW}$ mesuré" et l'instant de réception "$t_{GW}$ attendu". On a : $\Delta t_{TA} = 0$ (c'est-à-dire une avance temporelle nulle), seulement si la position estimée utilisée est parfaitement égale à la position réelle du terminal ;
- la station de base émet (93) vers le terminal, via le satellite actif, l'information relative à l'avance temporelle $\Delta t_{TA}$;
- à partir de l'information relative à l'avance temporelle $\Delta t_{TA}$ et de la position . estimée "moyenne", le terminal calcule (94) sa position estimée "fine" 95 ;
- en utilisant la position estimée "fine" (précédente) 95 à la place de la position estimée "moyenne" 74 ou 74', le terminal réitère M fois les étapes précitées 90 à 94, de façon à obtenir M fois une nouvelle position estimée "fine" 95'. Chacune de ces M itération est par exemple effectuée avec un satellite distinct. On notera que si c'est avec un même satellite, alors il est préférable que pour deux itérations successives, le satellite possède des azimuths $\theta$ et/ou des élévations $\alpha$, vus par le terminal, distants d'au moins 10°.

Ces M nouvelles positions estimées "fines" peuvent être calculées successivement, soit chacune à partir de la position estimée "fine" de l'itération qui précède, soit toutes à partir d'une même position estimée ("moyenne" ou "fine" précédente).

Dans le second cas, on peut alors prévoir d'optimiser l'étape 94 de détermination de la position estimée "fine" 95. Pour cela, on recherche le point P; parmi un ensemble prédéterminé de points, qui minimise l'erreur que présente la position estimée "fine" du terminal, lorsque cette erreur est cumulée sur les M positions estimées "fines" toutes calculées à partir d'une même position estimée "moyenne" ou "fine" précédente. L'ensemble prédéterminé de points est par exemple un disque dont le centre est la position estimée "moyenne" (pour le premier calcul d'une position estimée "fine") ou la position estimée "fine" précédente (pour chaque calcul d'une nouvelle position estimée "fine"), et le rayon est l'incertitude présentée par la position estimée ("moyenne" ou "fine" précédente) à laquelle est égal le centre du disque.

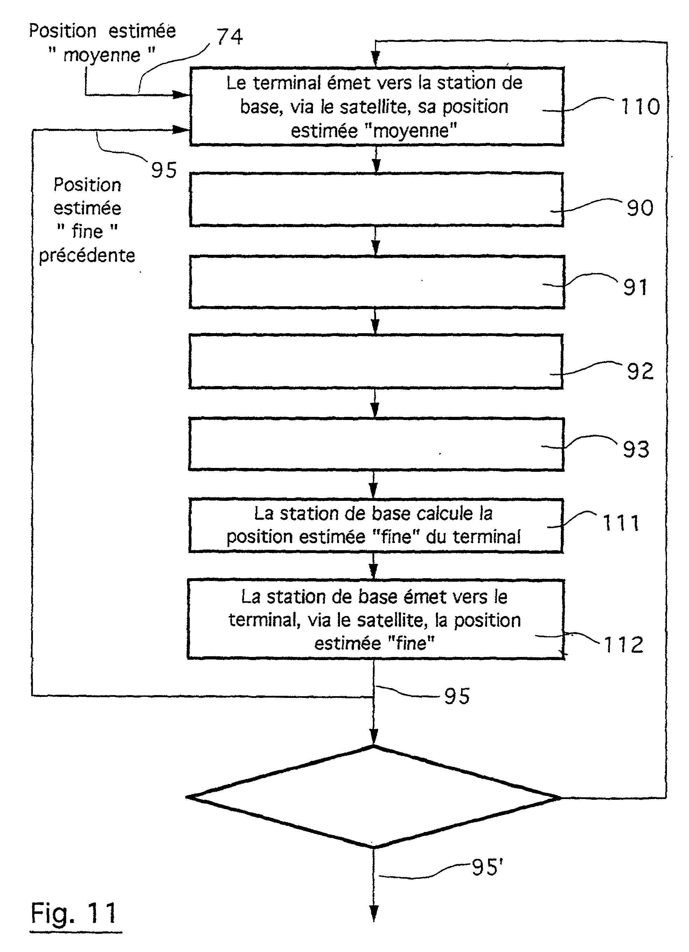

Le second mode de réalisation de la phase de localisation "fine" 3, présenté sur l'organigramme de la figure 11, se distingue du premier mode de réalisation en ce que c'est la station de base, et non pas le terminal, qui calcule la position estimée "fine" du terminal.

Dans le second mode de réalisation, la phase de localisation "fine" comprend donc, outre les étapes référencées 90 à 93 sur la figure 9 et déjà expliquées ci-dessus, les étapes préalable et finale suivantes :

- le terminal émet (110) vers la station de base, via le satellite actif, une information relative à sa position estimée "fine" ;
- la station de base émet (112) vers le terminal, via le satellite actif, la position estimée "moyenne" du terminal.

Par ailleurs, l'étape référencée 94 sur la figure 9 est remplacée par l'étape 111 suivante :

- à partir de l'information relative à l'avance temporelle et de la position estimée "moyenne", la station de base calcule (111) la position estimée "fine" du terminal.

## Revendications

1. Procédé d'amélioration de la précision de localisation d'un terminal fixe d'un système de télécommunications par satellites du type comprenant une constellation de satellites, une pluralité de stations de base, chacune associée à une cellule géographique distincte et reliée à un réseau terrestre de télécommunication, et une pluralité de terminaux fixes, un ou plusieurs satellite(s) ne pouvant être étant dit(s) actifs vis-à-vis d'une station de base donnée que s'il(s) se trouve(nt) en visibilité de celle-ci, chaque satellite actif qui reçoit des informations de la station de base vis-à-vis de laquelle il est actif les retransmettant vers le ou les terminaux fixes présents dans sa zone de couverture, chaque satellite actif qui reçoit des informations d'un terminal fixe présent dans sa zone de couverture les retransmettant vers la station de base vis-à-vis de laquelle il est actif, le procédé comportant une première phase de localisation dite grossière apte à fournir une surface de présence dans laquelle la position estimée grossière du terminal se trouve **caractérisé en ce qu'**il comprend une seconde phase de localisation dite "moyenne" (2), comprenant elle-même les étapes suivantes :

   -i- à un premier instant t1', ledit terminal reçoit (70) d'un premier satellite actif de premières informations relatives d'une part à l'instant t1 de retransmission desdites premières informations par ledit premier satellite actif et d'autre part à la position p1 dudit premier satellite actif audit instant t1 ;

-ii- à un second instant t2', égal à ou proche dudit premier instant t1', ledit terminal reçoit (71) d'un second satellite actif de secondes informations relatives d'une part à l'instant t2 de retransmission desdites secondes informations par ledit second satellite actif et d'autre part à la position p2 dudit second satellite actif audit instant t2 ;

-iii- ledit terminal calcule (72) un premier hyperboloïde $H_{1,2}$ sur lequel se trouve ledit terminal et tel que : $H_{1,2}$ : d2 - d1 = (t2' - t2).c - (t1' - t1).c, où :

- d1 est la distance entre le terminal et ladite position p1 du premier satellite actif à l'instant t1,
- d2 est la distance entre le terminal et ladite position p2 du second satellite actif à l'instant t2,
- t1 et t2 sont lesdits premier et second instants de retransmission par lesdits premier et second satellites respectivement,
- t1' et t2' sont lesdits premier et second instants de réception par le terminal,
- c est la vitesse de la lumière ;

-iv- ledit terminal réitère les étapes -i- à -iii- (70 à 72) au moins deux fois, de façon à calculer au moins des second et troisième hyperboloïdes sur lesquels se trouve ledit terminal ;

-v- ledit terminal détermine (73) une position estimée "moyenne", en calculant l'intersection desdits premier et au moins second et troisième hyperboloïdes et en tenant compte de la position estimée "grossière" dudit terminal.

2. Procédé selon la revendication 1, **caractérisé en ce que**, dans ladite étape -iv-, chaque nouvelle itération des étapes -i- à -iii- (70 à 72) est effectuée avec un couple de satellites appartenant au groupe comprenant :

- un couple de deux satellites distincts desdits premier et second satellites ;
- un couple de deux satellites dont l'un est un desdits premier et second satellites et l'autre est distinct desdits premier et second satellites.

3. Procédé selon l'une quelconque des revendications 1 et 2, **caractérisé en ce que** ladite phase de localisation "moyenne" (2) comprend en outre l'étape suivante :

-vi- en utilisant la position estimée "moyenne" précédente (74) à la place de ladite position estimée "grossière", ledit terminal réitère au moins une fois les étapes -i- à -v-, de façon à obtenir une nouvelle position estimée "moyenne" (74').

4. Procédé selon l'une quelconque des revendications 1 à 3, **caractérisé en ce que** la station de base, vis-à-vis de laquelle lesdits premier et second satellites sont actifs, émet lesdites premières et secondes informations avec une précompensation temporelle telle qu'après retransmission par lesdits premier et second satellites, lesdites premières et secondes informations sont reçues sensiblement simultanément par ladite station de base.

5. Procédé selon l'une quelconque des revendications 1 à 4, **caractérisé en ce que** le couple desdits premier et second satellites actifs appartient au groupe comprenant :

- les couples dont les deux satellites sont simultanément actifs à un instant quelconque ;
- les couples dont les deux satellites, dits satellites sortant et entrant respectivement, sont simultanément actifs uniquement lors d'un saut inter-satellites ("hand-off") du type permettant à une station de base de remplacer ledit satellite actif sortant, qui cesse d'être en visibilité, par ledit satellite actif entrant, qui arrive en visibilité.

6. Procédé selon l'une quelconque des revendications 1 à 5, **caractérisé en ce que** chaque terminal comprend des moyens de réception simultanée d'informations émises par au moins deux satellites distincts.

7. Procédé selon la revendication 6, **caractérisé en ce que** lesdits moyens de réception simultanée d'informations émises par au moins deux satellites distincts comprennent au moins deux antennes directives pointées chacune sur un satellite distinct.

8. Procédé selon l'une quelconque des revendications 1 à 7, **caractérisé en ce que** ladite phase de localisation "grossière" (1) comprend les étapes suivantes :

-a- ledit terminal recherche et acquiert (20) un satellite, pour une élévation $\alpha$ prédéterminée, en faisant varier son azimuth $\theta$;

-b- ledit terminal reçoit (21) dudit satellite acquis une information relative à la position dudit satellite acquis ;

-c- ledit terminal calcule (22), à partir de ladite information relative à la position du satellite acquis, une surface isoélévation, projetée sur un modèle de terre prédéterminé et sur laquelle se trouve ledit terminal ;

-d- ledit terminal réitère les étapes -a- à -c- (20 à 22) au moins deux fois, de façon à calculer au moins deux autres surfaces isoélévation sur lesquelles se trouve ledit terminal ;

-e- ledit terminal détermine (23) une position estimée "grossière", en calculant l'intersection desdites au moins trois surfaces isoélévation.

9. Procédé selon la revendication 8, **caractérisé en ce que**, sur lesdits au moins trois satellites, acquis lors des itérations successives des étapes -a- à -c- (20 à 22), au moins un possède un azimuth θ, vus par ledit terminal, distant d'au moins 10° des azimuth des deux autres satellites.

10. Procédé selon la revendication 7 et l'une quelconque des revendications 8 et 9, **caractérisé en ce que**, lors de ladite étape -a- (20), lesdites deux antennes directives tournent à une même élévation, chacune couvrant environ 180° autour de l'angle d'azimuth θ.

11. Procédé selon l'une quelconque des revendications 1 à 10, **caractérisé en ce que** ladite phase de localisation "moyenne" (2) est suivie d'une phase de localisation "fine" (3) comprenant les étapes suivantes:

-1- la station de base associée à la cellule dans laquelle se trouve ledit terminal émet (90) vers ledit terminal, via un satellite actif vis-à-vis de ladite station de base, un message prédéterminé ;

-2- ledit terminal reçoit (91) ledit message prédéterminé et, connaissant d'une part sa position estimée "moyenne" et d'autre part la position temps réel des satellites de ladite constellation, génère puis émet vers ladite station de base, via ledit satellite actif, un message de réponse indiquant notamment l'intervalle de temps entre la réception dudit message prédéterminé et l'émission dudit message de réponse ;

-3- à partir dudit message de réponse, ladite station de base calcule (92) une information relative à l'avance temporelle que présente ledit terminal ;

-4- ladite station de base émet (93) vers ledit terminal, via ledit satellite actif, ladite information relative à l'avance temporelle ;

-5- à partir de ladite information relative à l'avance temporelle et de ladite position estimée "moyenne", ledit terminal calcule (94) sa position estimée "fine".

12. Procédé selon la revendication 11, **caractérisé en ce que** ladite phase de localisation "fine" (3) comprend en outre les étapes préalable et finale suivantes :

-0- ledit terminal émet (110) vers ladite station de base, via ledit satellite actif, une information relative à sa position estimée "moyenne" ;

-6- ladite station de base émet (112) vers ledit terminal, via ledit satellite actif, ladite position estimée "fine" du terminal;

**en ce que** ladite étape -5- (94) est remplacée par l'étape suivante :

-5'- à partir de ladite information relative à l'avance temporelle et de ladite position estimée "moyenne", ladite station de base calcule (111) la position estimée "fine" du terminal.

13. Procédé selon l'une quelconque des revendications 11 et 12, **caractérisé en ce que** ladite phase de localisation "fine" (3) comprend en outre l'étape suivante :

-7- en utilisant la position estimée "fine" précédente à la place de ladite position estimée "moyenne", ledit terminal réitère au moins une fois les étapes -1- à -5- (90 à 92) ou -0- à -6- (110, 90 à 93, 111 et 112), de façon à obtenir une nouvelle position estimée "fine".

14. Procédé selon la revendication 13, **caractérisé en ce que**, dans l'étape -7-, chaque nouvelle itération des étapes -1- à -5- ou -0- à -6- est effectuée avec un même satellite, mais à des azimuths θ et/ou des élévations α, vus par ledit terminal, distants d'au moins 10°.

15. Procédé selon la revendication 13, **caractérisé en ce que**, dans l'étape -7-, chaque nouvelle itération des étapes -1- à -5- ou -0- à -6- est effectuée avec un satellite distinct.

**Patentansprüche**

1. Verfahren zur Verbesserung der Genauigkeit der Standortbestimmung eines festen Endgerätes eines Telekommunikationssystems durch Satelliten des Typs, der eine Satellitenkonstellation, eine Vielzahl von Basisstationen, die jeweils zu einer unterschiedlichen geographischen Zelle gehören und mit einem terrestrischen Telekommunikationsnetz verbunden sind, und eine Vielzahl von festen Endgeräten umfasst, wobei ein oder mehrere Satellit (en) nur gegenüber einer gegebenen Basisstastion aktiv genannt werden kann (können), wenn er (sie) sich in deren Sicht befindet (befinden), wobei jeder aktive Satellit, der Informationen von der Basisstation empfängt, gegenüber welcher er aktiv ist, sie wieder zu dem oder den festen Endgeräten überträgt, die sich in seinem Abdeckungsbereich befinden, wobei jeder Satellit, der Informationen von einem festen Endgerät empfängt, das sich in seinem Abdeckungsbereich befindet, sie wieder zur Basisstation überträgt, gegenüber welcher er aktiv ist, wobei das Verfahren eine erste Phase der Standortbestimmung, grob genannt, umfasst, die fähig ist eine Fläche des Vorhandenseins zu liefern, in welcher sich die grobe geschätzte Posicion des Endgeräts befindet,

**dadurch gekennzeichnet, dass** es eine zweite Phase der Standortbestimmung, "mittel" genannt, (2) umfasst, die wiederum die folgenden Schritte umfasst:

-i- das Endgerät empfängt (70) zu einem ersten Zeitpunkt t1' von einem ersten aktiven Satelliten erste Informationen, die sich einerseits auf den Zeitpunkt t1 der Wiederübertragung der ersten Informationen durch den ersten aktiven Satelliten und andererseits auf die Position p1 des ersten aktiven Satelliten zum Zeitpunkt t1 beziehen;

-ii- das Endgerät empfängt (71) zu einem zweiten Zeitpunkt t2' gleich oder nahe dem ersten Zeitpunkt t1' von einem zweiten aktiven Satelliten zweite Informationen, die sich einerseits auf den Zeitpunkt t2 der Wiederübertragung der zweiten Informationen durch den zweiten aktiven Satelliten und andererseits auf die Position p2 des zweiten aktiven Satelliten zum Zeitpunkt t2 beziehen;

-iii- das Endgerät berechnet (72) ein erste Hyperboloid $H_{1,2}$, auf welchem sich das Endgerät befindet und so **dass**: $H_{1,2}$ : d2-d1 = (t2'-t2) .c- (t1'-t1) .c, worin :

- dl die Entfernung zwischen dem Endgerät und der Position p1 des ersten aktiven Satelliten zum Zeitpunkt t1 ist,
- d2 die Entfernung zwischen dem Endgerät und der Position p2 des zweiten aktiven Satelliten zum Zeitpunkt t2 ist,
- t1 und t2 die ersten und zweiten Zeitpunkte der Wiederübertragung durch die ersten bzw. zweiten Satelliten sind,
- t1' und t2' die ersten und zweiten Zeitpunkte des Empfangs durch das Endgerät sind,
- c die Geschwindigkeit des Lichts ist;

-iv- das Endgerät wiederholt die Schritte -i- bis- iii- (70 bis 72) mindestens zweimal, um wenigstens ein zweites und ein drittes Hyperboloid zu berechnen, auf welchen sich das Endgerät befindet;

-v- das Endgerät bestimmt (73) eine "mittlere" geschätzte Position, indem es den Schnittpunkt der ersten und wenigstens zweiten und dritten Hyperboloide berechnet und die "grobe" geschätzte Position des Endgeräts berücksichtigt.

2. Verfahren nach Anspruch 1, **dadurch gekenn-**

**zeichnet, dass** im Schritt -iv- jede neue Wiederholung der Schritte -i- bis -iii- (70 bis 72) mit einem Satellitenpaar durchgeführt wird, das zu der Gruppe gehört, welche umfasst:

- ein Paar aus zwei Satelliten, die von den ersten und zweiten Satelliten verschieden sind,
- ein Paar aus zwei Satelliten, wovon der eine einer der ersten oder zweiten Satelliten ist und der andere von den ersten und zweiten Satelliten verschieden ist.

3. Verfahren nach einem der Ansprüche 1 und 2, **dadurch gekennzeichnet, dass** die Phase der "mittleren" Standortbestimmung (2) außerdem den folgenden Schritt umfasst:
-vi- das Endgerät wiederholt unter Verwendung der vorhergehenden "mittleren" geschätzten Position (74) an Stelle der "groben" geschätzten Position wenigstens einmal die Schritte -i- bis -v-, um eine neue "mittlere" geschätzte Position (74') zu erhalten.

4. Verfahren nach einem der Ansprüche 1 bis 3, **dadurch gekennzeichnet, dass** die Basisstation, gegenüber welcher die ersten und zweiten Satelliten aktiv sind, die ersten und zweiten Informationen mit einer zeitlichen Vorkompensastion sendet, so **dass** nach der Wiederübertragung durch die ersten und zweiten Satelliten die ersten und zweiten Informationen von der Basisstation im Wesentlichen gleichzeitig empfangen werden.

5. Verfahren nach einem der Ansprüche 1 bis 4, **dadurch gekennzeichnet, dass** das Paar der ersten und zweiten aktiven Satelliten zu der Gruppe gehört, die umfasst:

- die Paare, deren beide Satelliten zu irgendeinem Zeitpunkt gleichzeitig aktiv sind;
- die Paare, deren beide Satelliten, abgehende bzw. ankommende Satelliten genannt, nur bei einem Sprung zwischen Satelliten ("hand-off") des Typs gleichzeitig aktiv sind, der einer Basisstation gestatte, den abgehenden aktiven Satelliten, der aufhört sichtbar zu sein, durch den ankommenden aktiven Satelliten zu ersetzen, der sichtbar wird.

6. Verfahren nach einem der Ansprüche 1 bis 5, **dadurch gekennzeichnet, dass** jedes Endgerät Mittel zum gleichzeitigen Empfang von Informationen umfasst, die von wenigstens zwei unterschiedlichen Satelliten gesendet werden.

7. Verfahren nach Anspruch 6, **dadurch gekennzeichnet, dass** die Mittel zum gleichzeitigen Empfang von Informationen, die von wenigstens zwei unterschiedlichen Satelliten gesendet werden, wenigstens zwei Richtantennen umfassen, die jeweils auf einen unterschiedlichen Satelliten ausgerichtet sind.

8. Verfahren nach einem der Ansprüche 1 und 7, **dadurch gekennzeichnet, dass** die Phase der "groben" Standortbestimmung (1) die folgenden Schritte umfasst:

   -a- das Endgerät sucht und erfasst (20) für eine vorher bestimmte Höhe α einen Satelliten, indem es seinen Azimut θ variieren lässt;
   -b- das Endgerät empfängt (21) vom erfassten Satelliten eine Information, die sich auf die Position des erfassten Satelliten bezieht;
   -c- das Endgerät berechnet (22) ausgehend von der sich auf die Position des erfassten Satelliten beziehenden Information eine Fläche gleicher Höhe, die auf ein vorher bestimmtes Erdmodell projiziert wird und auf welcher sich das Endgerät befindet;
   -d- das Endgerät wiederholt die Schritte -a- bis -c-(20 bis 22) mindestens zweimal, um wenigstens zwei weitere Flächen gleicher Höhe zu berechnen, auf weichen sich das Endgerät befindet;
   -e- das Endgerät bestimmt (23) eine "grobe" geschätzte Position, indem es den Schnittpunkt der wenigstens drei Flächen gleicher Höhe berechnet.

9. Verfahren nach Anspruch 8, **dadurch gekennzeichnet, dass** bei den wenigstens drei Satelliten, die bei aufeinanderfolgenden Wiederholungen der Schritte -a-bis -c- (20 bis 22) erfasst werden, wenigstens einer einen Azimut θ besitzt, vom Endgerät gesehen, der um wenigstens 10° vom Azimut der beiden anderen Satelliten entfernt ist.

10. Verfahren nach Anspruch 7 und einem der Ansprüche 8 und 9, **dadurch gekennzeichnet, dass** bei Schritt -a-(20) die beiden Richtantennen sich zur selben Höhe drehen, wobei jede etwa 180° um den Azimutwinkel θ herum abdeckt.

11. Verfahren nach einem der Ansprüche 1 bis 10, **dadurch gekennzeichnet, dass** der Phase der "mittleren" Standortbestimmung (2) eine Phase der "feinen" Standortbestimmung (3) folgt, die die folgenden Schritte umfasst:

    -1- die Basisstation, die zu der Zelle gehört, in der sich das Endgerät befindet, sendet (90) über einen gegenüber der Basissiacion aktiven Satelliten eine vorher bestimmte Nachricht zum Endgerät;
    -2- das Endgerät empfängt (91) die vorher bestimmte Nachricht und erzeugt und sendet dann in Kenntnis einerseits seiner "mittleren" geschätzten Position und andererseits der Echtzeitposition der Satelliten der Konstellation über den aktiven Satelliten eine Antwortnachricht zur Basisstation, die insbesondere das Zeitintervall zwischen dem Empfang der vorher bestimmten Nachricht und der Sendung der Antwortnachricht angibt;
    -3- die Basisstation berechnet (92) ausgehend von der Antwortnachricht eine Information, die sich auf den zeitliche Vorsprung bezieht, den das Endgerät aufweist;
    -4- die Basisstation sendet (93) über den aktiven Satelliten die Information, die sich auf den zeitlichen Vorsprung bezieht, zum Endgerät;
    -5- das Endgerät berechnet (94) ausgehend von der Information, die sich auf den zeitlichen Vorsprung bezieht, und der "mittleren" geschätzten Position seine "feine" geschätzte Position.

12. Verfahren nach Anspruch 11, **dadurch gekennzeichnet, dass** die Phase der "feinen" Standortbestimmung (3) außerdem die vorherigen und abschließenden Schritte umfasst:

    -0- das Endgerät sendet (110) über den aktiven Satelliten eine Information, die sich auf seine "mittlere" geschätzte Position bezieht, zur Basisstation;
    -6- die Basisstation sendet (112) über den aktiven Satelliten die "feine" geschätzten Position des Endgeräts zum Endgerät;
    **dass** der Schritt -5- (94) durch den folgenden Schritt ersetzt wird
    -5'- die Basisstation berechnet (111) ausgehend von der Information, die sich auf den zeitlichen Vorsprung bezieht, und der "mittleren" geschätzten Position die "feine" geschätzte Position des Endgeräts.

13. Verfahren nach einem der Ansprüche 11 und 12, **dadurch gekennzeichnet, dass** die Phase der "feinen" Standortbestimmung (3) außerdem den folgenden Schritt umfasst:
    -7- das Endgerät wiederholt unter Verwendung der vorhergehenden "feinen" geschätzten Position an Stelle der "mittleren" geschätzten Position wenigstens einmal die Schritte -1- bis -5- (90 bis 92) oder -0- bis -6- (110, 90 bis 93, 111 und 112), um eine neue "feine" geschätzte Position zu erhalten.

14. Verfahren nach Anspruch 13, **dadurch gekennzeichnet, dass** im Schritt -7- jede neue Wiederholung der Schritte -1- bis -5- oder -0- bis -6- mit demselben Satelliten aber bei Azimuten θ und/oder Höhen α, vom Endgerät gesehen, durchgeführt wird, die einen Abstand von wenigstens 10° haben.

**15.** Verfahren nach Anspruch 13, **dadurch gekennzeichnet, dass** im Schritt -7- jede neue Wiederholung der Schritte -1- bis -5- oder -0- bis -6- mit einem unterschiedlichen Satelliten durchgeführt wird.

**Claims**

**1.** A method of locating more accurately a fixed terminal of a satellite telecommunication system comprising a constellation of satellites, a plurality of gateway stations each associated with a separate geographical cell and connected to a terrestrial telecommunication network, and a plurality of fixed terminals,

one or more satellites being active relative to a given gateway station only if they are visible therefrom, each active satellite which receives information from the gateway station relative to which it is active transmits it to the fixed terminal or terminals in its coverage area, each active satellite that receives information from a fixed terminal in its coverage area transmitting the information to the gateway station relative to which it is active, the method including a first "coarse" location phase able to provide a location area in which the coarse estimated position of the terminal is located,

**characterized in that** it comprises a second "intermediate" location phase (2) comprising the following steps:

-i- at a first time t1', said terminal receives (70) from a first active satellite first information relating to the time t1 of transmission of said first information by said first active satellite and the position p1 of said first active satellite at said time t1;

-ii- at a second time t2' the same as or close to said first time t1', said terminal receives (71) from a second active satellite second information relating to the time t2 of transmission of said second information by said second active satellite and the position p2 of said second active satellite at said time t2;

-iii- said terminal calculates (72) a first hyperboloid $H_{1,2}$ on which said terminal is located and such that:

$$H_{1,2} = d2 - d1 = (t2' - t2).c - (t1' - t1).c$$

where:

- d1 is the distance between the terminal and said position p1 of the first active satellite at time t1,

- d2 is the distance between the terminal and said position p2 of the second active satellite at time t2,

- t1 and t2 are said first and second times of transmission by said first and second satellites, respectively,

- +1' and t2' are said first and second times of reception by the terminal, and

- c is the speed of light;

-iv- said terminal reiterates steps -i- through -iii- (70 through 72) at least twice to calculate at least second and third hyperboloids on which said terminal is located; and

-v- said terminal determines (73) an "intermediate" estimated position by calculating the intersection of said first and at least second and third hyperboloids taking into account the "coarse" estimated position of said terminal.

**2.** A method according to claim 1 **characterized in that**, in said step -iv-, each new iteration of steps -i- through -iii- (70 through 72) is effected with a pair of satellites belonging to the group comprising:

- a pair of satellites separate from said first and second satellites; and

- a pair of satellites one of which is one of said first and second satellites and the other of which is separate from said first and second satellites.

**3.** A method according to claim 1 or claim 2 **characterized in that** said "intermediate" location phase (2) further includes the following step:

-vi- using the previous "intermediate" estimated position (74) instead of said "coarse" estimated position, said terminal reiterates at least once steps -i- through

-v- to obtain a new "intermediate" estimated position (74').

**4.** A method according to any one of claims 1 to 3 **characterized in that** the gateway station relative to which said first and second satellites are active transmits said first and second information with temporal precompensation such that after transmission by said first and second satellites said first and second information is received substantially simultaneously by said gateway station.

**5.** A method according to any one of claims 1 to 4 **characterized in that** the pair comprising said first and second active satellites belongs to the group comprising:

- the pairs in which the two satellites are simultaneously active at any time; and

- the pairs in which the two satellites, respectively outgoing and incoming, are simultaneously active exclusively during hand-off between satellites, enabling a gateway station to replace said outgoing active satellite, which is ceasing to be visible, by said incoming active satellite, which is becoming visible.

6. A method according to any one of claims 1 to 5 **characterized in that** each terminal has means for simultaneously receiving information transmitted by at least two different satellites.

7. A method according to claim 6 **characterized in that** said means for simultaneously receiving information transmitted by at least two separate satellites comprise at least two directional antennas each pointed at a separate satellite.

8. A method according to any one of claims 1 to 7 **characterized in that** said "coarse" location phase (1) comprises the following steps:

-a- said terminal searches for and acquires (20) a satellite for a predetermined elevation angle α by varying its azimuth angle θ;
-b- said terminal receives (21) from said acquired satellite information relating to the position of said acquired satellite;
-c- said terminal calculates (22) from said information relating to the position of the acquired satellite an iso-elevation surface projected onto a predetermined Earth model and on which said terminal is located;
-d- said terminal reiterates steps -a- through -c- (20 through 22) at least twice so as to calculate at least two other iso-elevation surfaces on which said terminal is located; and
-e- said terminal determines (23) a "coarse" estimated position by calculating the intersection of said at least three iso-elevation surfaces.

9. A method according to claim 8 **characterized in that** of said at least three satellites acquired during successive iteration of steps -a- through -c- (20 through 22) at least one has an azimuth angle θ as seen from said terminal separated by at least 10° from the azimuth angles of the other two satellites.

10. A method according to claim 7 and claim 8 or claim 7 and claim 9
**characterized in that**, in said step -a- (20), said two directional antennas turn with the same elevation angle, each covering approximately 180° about the azimuth angle θ.

11. A method according to any one of claims 1 to 10 **characterized in that** said "intermediate" location phase (2) is followed by a "fine" location phase (3) comprising the following steps:

-1- the gateway station associated with the cell in which said terminal is located sends (90) said terminal a predetermined message via a satellite active relative to said gateway station;
-2- said terminal receives (91) said predetermined message and, knowing its "intermediate" estimated position and the real time position of the satellites of said constellation, generates and then transmits to said gateway station via said active satellite a response message indicating in particular the time period between reception of said predetermined message and transmission of said response message;
-3- from said response message, said gateway station calculates (92) information relating to the timing advance of said terminal;
-4- said gateway station transmits (93) to said terminal via said active satellite said information relating to the timing advance; and
-5- from said information relating to the timing advance and from said "intermediate" estimated position said terminal calculates (94) its "fine" estimated position.

12. A method according to claim 11 **characterized in that** said "fine" location phase (3) further includes the following preliminary and final steps:

-0- said terminal transmits (110) information relating to the "intermediate" estimated position to said gateway station via said active satellite; and
-6- said gateway station transmits (112) said "fine" estimated position of the terminal to said terminal via said active satellite; and **in that** said step -5- (94) is replaced by the following step:
-5- from said information relating to the timing advance and said "intermediate" estimated position, said gateway station calculates (111) the "fine" estimated position of the terminal.

13. Method according to claim 11 or claim 12 **characterized in that** said "fine" location phase (3) further includes the following step:
-7- using the previous "fine" estimated position in place of said "intermediate" estimated position, said terminal reiterates at least once steps -1- through -5- (90 through 92) or -0- through -6- (110, 90 through 93, 111 and 112) to obtain a new "fine" estimated position.

14. A method according to claim 13 **characterized in**

**that**, in step -7-, each new iteration of steps -1- through -5- or -0- through -6- is effected with the same satellite but with azimuth angles θ and/or elevation angles α as seen from said terminal separated by at least 10°.

15. A method according to claim 13 **characterized in that** each new iteration of steps -1- through -5- or -0- through -6- in step 7 is effected with a different satellite.

LOCALISATION " GROSSIERE " ——— 1

LOCALISATION " MOYENNE " ——— 2

LOCALISATION " FINE " ——— 3

## Fig. 1

20 —— RECHERCHE ET ACQUISITION D'UN SATELLITE

21 —— LE TERMINAL REÇOIT UNE INFORMATION RELATIVE A LA POSITION DU SATELLITE ACQUIS

22 —— CALCUL D'UNE SURFACE ISOELEVATION

DERNIERE ITERATION ? — NON

OUI

23 —— CALCUL DE L'INTERSECTION DES N SURFACES ISOELEVATION

## Fig. 2

24 —— POSITION ESTIMEE " GROSSIERE "

**30**

S

x

T

α

y

θ

Antenne 1

Antenne 2

## Fig. 3

x

**30**

Antenne 1

y

Antenne 2

## Fig. 4

**50**

$\alpha + \delta\alpha$

S

T

φ

α

M

α

$\alpha + \delta\alpha$

$\varepsilon + \delta\varepsilon$

**50**

$\varepsilon$

Centre de
la Terre

## Fig. 5

S

**50**

## Fig. 6

**Fig. 7**

Position estimée " grossière " 24

A t1', le terminal reçoit des informations relatives à t1 et p1 — 70

Position estimée " moyenne " précédente — 74

A t2', le terminal reçoit des informations relatives à t2 et p2 — 71

Calcul d'un hyperboloïde — 72

Dernière itération ? — NON / OUI

Calcul de l'intersection des N hyperboloïdes — 73

74

Calcul d'une nouvelle position estimée moyenne ? — OUI / NON — 74'

Nouvelle position estimée " moyenne "

**Fig. 8**

Station de base

$ts^1$  $ts^2$  $t_{GW}^0$

Satellite 1

t1

Satellite 2

$\Delta t$  t2

Terminal

t1'  $\Delta t'$  t2'

Position estimée
" moyenne "     74

Position
estimée
" fine ".
précédente

95

| La station de base émet vers le terminal, via le satellite, un message prédéterminé | 90 |

| Le terminal reçoit le message prédéterminé, puis émet vers la station de base, via le terminal, un message de réponse | 91 |

| La station de base reçoit le message de réponse et calcule le "Timing Advance" | 92 |

| La station émet le "Timing Advance" vers le terminal, via le satellite | 93 |

| Le terminal calcule sa position estimée "fine" | 94 |

95

Calcul d'une nouvelle position estimée "fine" ?   OUI

Nouvelle position     NON
estimée " fine "          95'

**Fig. 9**

$\Delta t_{TA}$

Station de base

$t_{GW}^0$

$t_{GW}$ mesuré      $t_{GW}$ attendu

Satellite

$t_S^0$          $t_S$

**Fig. 10**

Terminal

$t_T^0$      $t_T$

$\Delta t_T$

Position estimée
" moyenne "  ⌢ 74

Le terminal émet vers la station de
base, via le satellite, sa position
estimée "moyenne"  ⌐ 110

95

Position
estimée
" fine "
précédente

⌐ 90

⌐ 91

⌐ 92

⌐ 93

La station de base calcule la
position estimée "fine" du terminal  ⌐ 111

La station de base émet vers le
terminal, via le satellite, la position
estimée "fine"  ⌐ 112

95

95'

## Fig. 11